# EUROPEAN PATENT APPLICATION

(11) **EP 4 783 585 A1**
(43) Date of publication of application: **29.07.2026**
(21) Application number: 24867987.0
(22) Date of filing: 19.08.2024
(51) Int. Cl.: H04N 19/90, G06T 9/00, H04N 19/129

(54) **VIDEO ENCODING DEVICE, VIDEO DECODING DEVICE, VIDEO ENCODING METHOD, AND VIDEO DECODING METHOD**

(30) Priority: 21.09.2023 JP 2023155649; 19.10.2023 JP 2023179925
(71) Applicant: NEC Corporation, 108-8001 Tokyo (JP)
(72) Inventor: CHONO, Keiichi, Tokyo 108-8001 (JP); IIDA, Kenta, Tokyo 108-8001 (JP); TOKUMITSU, Kenta, Tokyo 108-8001 (JP); MORIYOSHI, Tatsuji, Tokyo 108-8001 (JP)
(74) Representative: Betten & Resch
(86) International application number: PCT/JP2024/029328
(87) International publication number: WO 2025/062906

(57) **Abstract**

In order to make it possible to align the processing sequence of entropy encoding when video encoding based on prediction encoding in an encoding unit and video encoding based on a neural network are combined, the video encoding device includes a neural network, quantization means, and entropy encoding means, and includes reordering means for reordering the quantization values outputted by the quantization means.

## Description

### Technical Field

The present disclosure relates to a video encoding device, a video decoding device, a video encoding method, and a video decoding method.

### Background Art

In order to efficiently transmit or record a video, a video encoding device that generates an encoded expression (hereinafter, referred to as a bitstream) obtained by encoding an input video and a video decoding device that decodes a bitstream to generate a decoded video are used.

### [Video Coding Based on Predictive Coding in Coding Unit]

Examples of video coding scheme standards include H.264/AVC (Advanced Video Coding), H.265/HEVC (High-Efficiency Video Coding), and H.266/VVC (Versatile Video Coding), which are standardized by ITU-T SG16 and ISO/IEC/SC29. As a recent video coding technique, there is a technique described in NPL 1.

In these video coding schemes, video data is managed in a hierarchical structure, and is encoded and decoded. The hierarchical structure includes, for example, a picture constituting video data, a slice obtained by partitioning (dividing) the picture (or tile), a coding tree unit (CTU) obtained by partitioning the slice, and a coding unit (CU) obtained by partitioning the coding tree unit.

An input image of a processing target CU is usually encoded in the past with respect to the processing target CU, and is predictively coded based on a prediction image generated based on a decoded image decoded. That is, the prediction error image obtained by subtracting the prediction image from the input image is encoded and decoded. Predictive coding includes intra-screen prediction (intra prediction) using a decoded image included in a picture at the same display time as that of the processing target CU and inter-screen prediction (inter prediction) using a decoded image included in a picture at a display time different from that of the processing target CU.

The prediction error image is encoded based on frequency transform, quantization, and entropy encoding. The prediction error image is decoded based on entropy decoding, inverse quantization, and inverse frequency transform. The frequency transform value of the quantized prediction error image is referred to as a quantized value.

The functions provided by the slice include independent decoding and data partitioning. The independent decoding is a function for decoding without using a decoding result of another slice in the same picture. The data partitioning is a function for partitioning the bitstream into any sizes.

### [Video Coding Based on Neural Network]

NPL 2 discloses a new video coding technique combining an auto-encoder, quantization, and entropy encoding, which are one of neural networks.

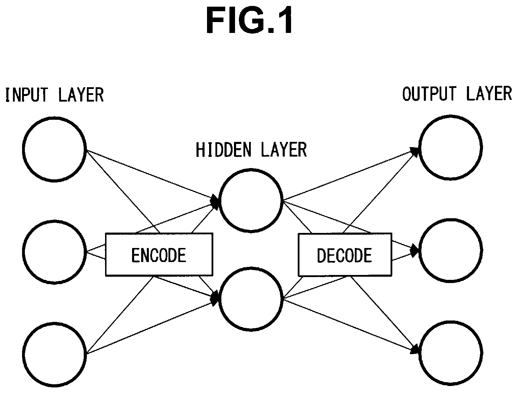

The auto-encoder compresses input data into a low-dimensional feature amount vector so as to include only important features. Thereafter, the auto-encoder generates reconstructed data obtained by reconstructing the low-dimensional feature amount vector to the original dimension. Fig. 1 is an explanatory diagram illustrating an algorithm of an auto-encoder.

In Fig. 1, a circular portion is referred to as a node, and an arrow is referred to as an edge. The processing of dropping into a low-dimensional feature amount vector (first half portion) is referred to as encoding. The processing of generating reconstructed data (latter half portion) is called decoding.

The learning of the auto-encoder proceeds so as to minimize the reconstruction error (the difference between the input data and the reconstructed data). In order to obtain meaningful feature amounts, the auto-encoder is designed to add constraints to the structure of the encoding or to add regularization terms to the loss function of the network.

### Citation List

### Non Patent Literature

NPL 1: "Algorithm description of Enhanced Compression Model 9(ECM 9)", JVET-AD2025, JVET of ITU-T SG 16 WP 3 and ISO/IEC JTC 1/SC 29 30th Meeting, Antalya, TR, 21-28 April 2023
NPL 2: J. Ball'e, V. Laparra, and E. P. Simoncelli, "End-to-end Optimized Image Compression", published as a conference paper at ICLR 2017

### Summary of Invention

### Technical Problem

In a case where video coding based on predictive coding in a coding unit and video coding based on a neural network are combined, there is a problem that the processing order of entropy encoding for quantized values cannot be integrated.

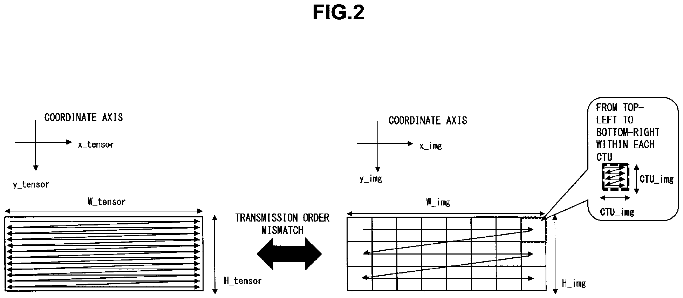

Fig. 2 is an explanatory diagram for explaining the above problem. The processing order of entropy encoding in video coding based on the neural network is illustrated on the left side of Fig. 2. The processing order of entropy encoding in video coding based on predictive coding in a coding unit is illustrated on the right side of Fig. 2.

In Fig. 2, W_tensor indicates a size in the row direction of the feature vector. H_tensor indicates the size of the feature vector in the column direction. W_img indicates the width (horizontal size) of the input picture. H_img indicates the height (vertical size) of the input picture. CTU_img indicates a width of the CTU. Fig. 2 illustrates a square CTU.

In video coding based on a neural network, quantized values are processed in order from top-left to bottom-right in units of samples. In video coding based on predictive coding in a coding unit, quantized values are processed in units of blocks (for example, the CTU) in order from top-left to bottom-right, but in each block, the quantized values are processed in order from top-left to bottom-right.

When attention is paid to the processing in a block, the processing order of the entropy encoding in the video coding based on the neural network and the processing order of the entropy encoding in the video coding based on the predictive coding in the coding unit are not aligned. Then, in a case where the width (it is assumed that the heights are the same) CTU_img of the CTU in the video coding based on the predictive coding in the coding unit is larger than 1, even if each of the width (W_tensor) and the height (H_tensor) of the quantized value for one picture obtained by the video coding based on the neural network is the same as each of the width (W_img) and the height (H_img) of the quantized value for one picture obtained by the video coding based on the predictive coding in the coding unit, the transmission order of the quantized values of the pictures is not the same.

Video coding based on a neural network has a problem that it is not possible to provide slice functions of independent decoding and data partitioning similarly to video coding based on predictive coding in a coding unit.

The reason why the independent decoding cannot be provided is that encoding on an encoding device side (encoding illustrated in Fig. 1) and decoding on a decoding device side (decoding illustrated in Fig. 1) may be executed beyond (cross) slice boundaries. The reason why data partitioning cannot be provided is that entropy encoding processing on an encoding side and entropy decoding processing on a decoding side may be continuous at a slice boundary.

The succession of entropy encoding processing means that the output is not data aligned. Further, in a case where entropy encoding is based on adaptive arithmetic coding, the succession of entropy encoding processing also includes not resetting the more probable symbol and its probability, and not resetting the engine of arithmetic coding. Meanwhile, a succession of related entropy decoding processing means not decoding the data for the data alignment. Further, in a case where the entropy encoding is based on adaptive arithmetic coding, the succession of entropy encoding processing also includes not resetting the more probable symbol and its probability, and not resetting the engine of arithmetic decoding.

An object of the present invention is to provide a video encoding device, a video decoding device, a video encoding method, and a video decoding method that make it possible to align processing order of entropy encoding at least in a case where video coding based on predictive coding in a coding unit and video coding based on a neural network are combined.

### Solution to Problem

A video encoding device according to the present disclosure includes a neural network, a quantization means, and an entropy encoding means, and includes a reordering means for reordering quantized values output from the quantization means.

A video decoding device according to the present disclosure includes a neural network, an inverse quantization means, and an entropy decoding means, and includes an inverse reordering means for reordering quantized values output from the entropy decoding means.

A video encoding method according to the present disclosure executes encoding processing based on a neural network, quantization processing, and entropy encoding, and reorders quantized values created by the quantization processing.

A video decoding method according to the present disclosure executes decoding processing based on a neural network, inverse quantization processing, and entropy decoding processing, and reorders quantized values obtained by the entropy decoding processing.

A video encoding program according to the present disclosure causes a computer to perform encoding processing based on a neural network, quantization processing, and entropy encoding, and perform processing of reordering quantized values created by the quantization processing.

A video decoding program according to the present disclosure causes a computer to perform decoding processing based on a neural network, inverse quantization processing, and entropy decoding processing, and perform processing of reordering quantized values obtained by the entropy decoding processing.

### Advantageous Effects of Invention

According to the present invention, in a case where video coding based on predictive coding in a coding unit and video coding based on a neural network are combined, it is possible to align the processing order of entropy encoding.

### Brief Description of Drawings

[Fig. 1] It depicts an explanatory diagram illustrating an algorithm of an auto-encoder.
[Fig. 2] It depicts an explanatory diagram for explaining a problem.
[Fig. 3] It depicts a block diagram illustrating a video encoder and a video decoder that encode and decode each picture constituting video data based on a neural network.
[Fig. 4] It depicts an explanatory diagram illustrating an example of reordering in an NN video encoder and reordering in an NN video decoder.
[Fig. 5] It depicts a flowchart illustrating an operation example of an NN video encoder.
[Fig. 6] It depicts a flowchart illustrating an operation example of an NN video decoder.
[Fig. 7] It depicts a block diagram illustrating an NN video encoder and an NN video decoder capable of guaranteeing independent decoding and data partitioning.
[Fig. 8] It depicts an explanatory diagram illustrating an example of slice partitioning in an NN video encoder.
[Fig. 9] It depicts a flowchart illustrating another operation example of the NN video encoder.
[Fig. 10] It depicts an explanatory diagram illustrating an example of slice partitioning in an NN video decoder.
[Fig. 11] It depicts a flowchart illustrating another operation example of the NN video decoder.
[Fig. 12] It depicts a block diagram illustrating a configuration example of an encoder and a decoder.
[Fig. 13] It depicts an explanatory diagram illustrating another example of slice partitioning in the NN video encoder.
[Fig. 14] It depicts an explanatory diagram illustrating another example of slice partitioning in the NN video decoder.
[Fig. 15] It depicts an explanatory diagram for explaining operations of a reordering section and an inverse reordering section.
[Fig. 16] It depicts a block diagram illustrating a configuration example of a video encoder.
[Fig. 17] It depicts a block diagram illustrating a configuration example of a video decoder.
[Fig. 18] It depicts a block diagram illustrating a configuration example of an information processing system.
[Fig. 19] It depicts a block diagram illustrating main parts of the video encoding device.
[Fig. 20] It depicts a block diagram illustrating main parts of the video decoding device.

### Example Embodiment

Hereinafter, example embodiments will be described with reference to the drawings.

### First Example Embodiment.

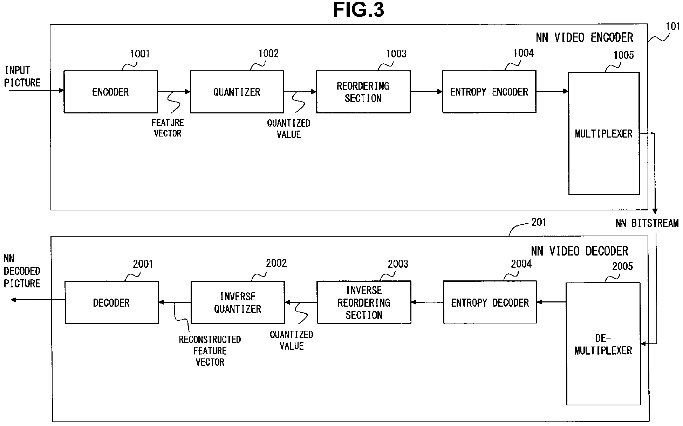

Fig. 3 is a block diagram illustrating a video encoder 101 and a video decoder 201 that encode and decode each picture constituting video data based on a neural network. Hereinafter, the video encoder 101 is expressed as an NN video encoder 101. The video decoder 201 is expressed as an NN video decoder 201.

The NN video encoder 101 includes an encoder 1001, a quantizer 1002, a reordering section 1003, an entropy encoder 1004, and a multiplexer 1005.

The NN video decoder 201 includes a decoder 2001, an inverse quantizer 2002, an inverse reordering section 2003, an entropy decoder 2004, and a de-multiplexer 2005.

The arrows in Fig. 3 clearly indicate the flow direction of the signal (data), but do not exclude the bidirectionality. It similarly applies to other block diagrams.

### [Description of Encoding Side]

In the NN video encoder 101, the encoder 1001 extracts a feature amount from an image of an input picture. Specifically, the encoder 1001 obtains a feature vector from the image of the input picture.

The quantizer 1002 quantizes the feature amount vector supplied from the encoder 1001 to obtain a quantized value.

The reordering section 1003 reorders the quantized values supplied from the quantizer 1002.

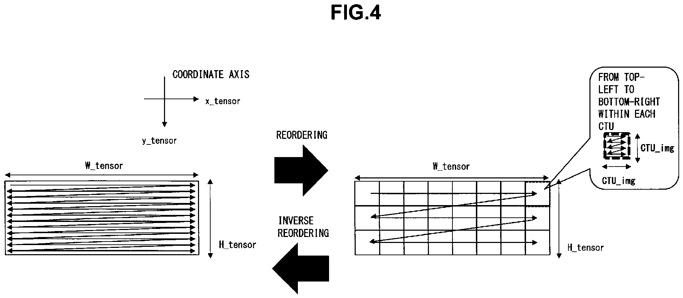

Fig. 4 is an explanatory diagram illustrating an example of reordering in the NN video encoder 101 and reordering in the NN video decoder 201. In the example illustrated in Fig. 4, the reordering section 1003 reorders the quantized values in units of CTU having a width of CTU_tensor. Here, CTU_tensor is the width of the coding unit in the encoded feature vector. Therefore, the ratio between CTU_tensor and CTU_img is the same as the ratio between W_tensor and W_img.

Only one CTU in the top-right is illustrated in Fig. 4, but the quantized values are reordered in units of CTUs for all CTUs.

For example, in a case where the size of the CTU is 4×4, the reordering section 1003 reorders the quantized values such that four quantized values in an (n+1)-th row are arranged next to four quantized values in an n(n: 1 to 3)-th row in the CTU.

The reordering method is not limited to this example, and the blocks may be reordered based on a designated processing order. For example, in a case where processing is performed in a spiral manner from the outer periphery to the center of the image, reordering may be performed in accordance with such processing order.

The entropy encoder 1004 performs entropy encoding on the reordered quantized value supplied from the reordering section 1003 to obtain entropy-encoded data.

The multiplexer 1005 outputs the entropy-encoded data supplied from the entropy encoder 1004 as a bitstream (referred to as an NN bitstream).

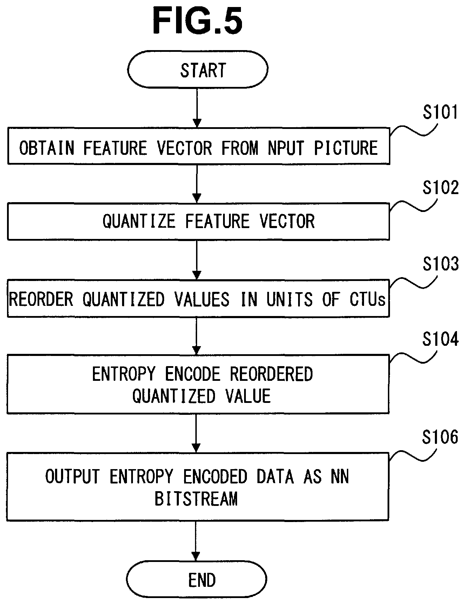

Next, an operation of the NN video encoder 101 will be described. Fig. 5 is a flowchart illustrating an operation example of the NN video encoder 101.

In the NN video encoder 101, the encoder 1001 extracts a feature amount from an input picture and generates a feature vector (step S101).

The quantizer 1002 quantizes the feature vector to generate a quantized value (step S102).

The reordering section 1003 reorders the quantized values supplied from the quantizer 1002 in units of CTUs in the predictive coding in the coding unit (step S103). In the processing of step S103, as illustrated in Fig. 4, the reordering section 1003 reorders the quantized values such that the processing order is the same as the processing order of the video coding based on the predictive coding in the coding unit among the CTUs.

The entropy encoder 1004 performs entropy encoding on the reordered quantized value to generate entropy-encoded data (step S104).

The multiplexer 1005 outputs the entropy-encoded data as an NN bitstream (step S106).

### [Description of Decoding Side]

In the NN video decoder 201, the de-multiplexer 2005 demultiplexes the NN bitstream to obtain entropy-encoded data.

The entropy decoder 2004 performs entropy decoding on the entropy-encoded data supplied from the de-multiplexer 2005 to obtain a quantized value.

The inverse reordering section 2003 reorders the quantized values supplied from the entropy decoder 2004 in units of samples. Specifically, as illustrated in Fig. 4, the inverse reordering section 2003 restores the arrangement order of the quantized values reordered by the reordering section 1003 in the NN video encoder 101 to the original order (see the left side in Fig. 4). That is, the inverse reordering section 2003 performs processing reverse to the reordering performed by the reordering section 1003 as the reordering.

The inverse quantizer 2002 inversely quantizes the reordered quantized value supplied from the inverse reordering section 2003 to obtain a reconstructed feature vector.

The decoder 2001 obtains a reconstructed image of a decoded picture (also referred to as an NN decoded picture) from the reconstructed feature vector.

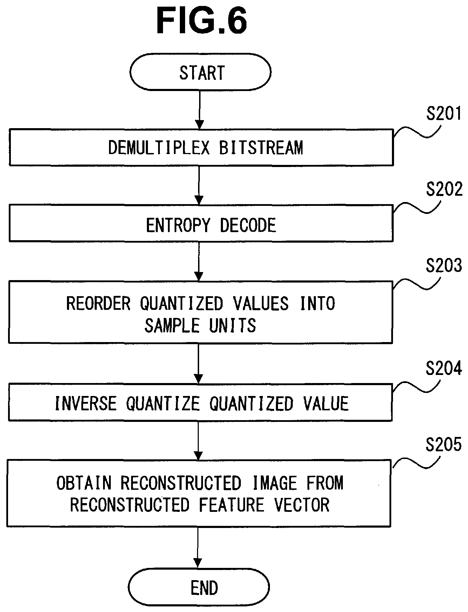

Next, the operation of the NN video decoder 201 will be described. Fig. 6 is a flowchart illustrating an operation example of the NN video decoder 201.

In the NN video decoder 201, the de-multiplexer 2005 demultiplexes the bitstream (step S201). The de-multiplexer 2005 obtains entropy-encoded data by demultiplexing.

The entropy decoder 2004 performs entropy decoding on the entropy-encoded data to obtain a quantized value (step S202).

The inverse reordering section 2003 reorders the quantized values supplied from the entropy decoder 2004 in units of samples (step S203). That is, the inverse reordering section 2003 returns the arrangement order of the quantized values to the original order (see the left side in Fig. 4).

The inverse quantizer 2002 inversely quantizes the quantized value (step S204). The inverse quantizer 2002 obtains a reconstructed feature vector by inverse quantization.

The decoder 2001 obtains a reconstructed image of the decoded picture from the reconstructed feature vector (step S205).

In the present example embodiment, in a case where video coding based on predictive coding in a coding unit and video coding based on a neural network are combined, the reordering section 1003 and the inverse reordering section 2003 can match the processing order of entropy encoding in video coding based on the neural network with the processing order of entropy encoding in video coding based on predictive coding. Therefore, in a case where the video coding based on the predictive coding in the coding unit and the video coding based on the neural network are combined, it is possible to align the processing order of the entropy encoding.

Furthermore, the reordering section 1003 and the inverse reordering section 2003 can align the processing order of entropy encoding, and can obtain an effect of simplifying the slice boundary determination processing. This is because whether the image to be processed belongs to the same slice region can be determined only by comparing the coordinates of the top-left corner, the slice number, or the number of the head CTU between the image to be processed and the slice to which the feature vector belongs.

### Second Example Embodiment.

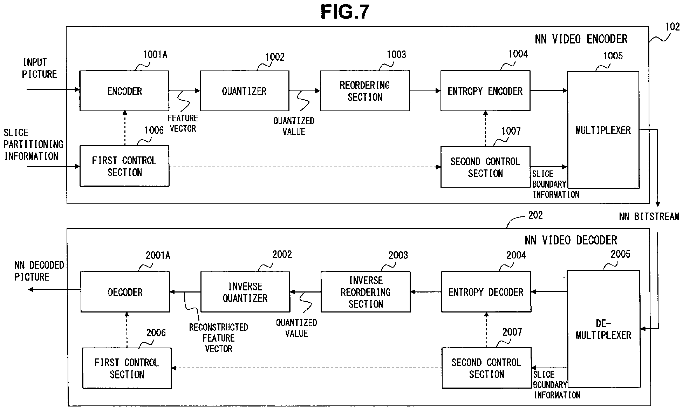

Fig. 7 is a block diagram illustrating an NN video encoder 102 and an NN video decoder 202 that encode and decode each picture constituting video data based on a neural network, the NN video encoder 102 and the NN video decoder 202 being capable of guaranteeing independent decoding and data partitioning in video coding based on the neural network.

The NN video encoder 102 includes an encoder 1001A, a quantizer 1002, a reordering section 1003, an entropy encoder 1004, a first control section 1006, a second control section 1007, and a multiplexer 1005.

The NN video decoder 202 includes a decoder 2001A, an inverse quantizer 2002, an inverse reordering section 2003, an entropy decoder 2004, a first control section 2006, a second control section 2007, and a de-multiplexer 2005.

### [Description of Encoding Side]

In the NN video encoder 102, configurations and functions of the quantizer 1002, the reordering section 1003, the entropy encoder 1004, and the multiplexer 1005 are the same as those in the first example embodiment.

The encoder 1001A obtains a feature vector from an image of an input picture, similarly to the encoder 1001 in the first example embodiment. However, the encoder 1001A does not use the input image of the slice region that is not the processing target when obtaining the feature vector of the slice region that is the processing target according to the control of the first control section 1006. That is, the feature vector of the slice region to be processed is similar to the feature vector obtained by encoding the input image of the slice region to be processed as one picture.

The first control section 1006 obtains a slice boundary in feature vector domain based on the input slice partitioning information (information for specifying slice boundary information). Alternatively, the first control section 1006 obtains information for specifying the slice boundary in feature vector domain. The information for specifying the slice boundary in feature vector domain is, for example, a slice boundary in image domain of each slice region. The first control section 1006 performs control so that encoding processing (hereinafter, simply referred to as encoding) by the encoder 1001 does not cross the slice boundary in image domain. Furthermore, the first control section 1006 supplies the position information of the slice boundary in feature vector domain to the multiplexer 1005 as slice boundary information via the second control section 1007.

The second control section 1007 monitors the entropy encoder 1004 and, after entropy encoding is performed on the last quantized value of each slice region, causes the entropy encoder 1004 to terminate the processing.

The termination of entropy encoding means to align the output of the entropy-encoded data. That is, the entropy encoder 1004 adds the alignment data for the data alignment to the entropy-encoded data. Further, in a case where the entropy encoding is based on adaptive arithmetic coding, the entropy encoder 1004 further resets the more probable symbol and its probability, and the engine of arithmetic coding for the termination of the entropy encoding.

In the present example embodiment, the multiplexer 1005 multiplexes the slice boundary information and the entropy-encoded data supplied from the entropy encoder 1004 and outputs the multiplexed data as an NN bitstream.

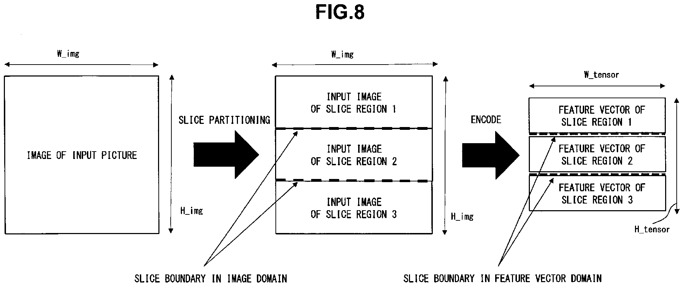

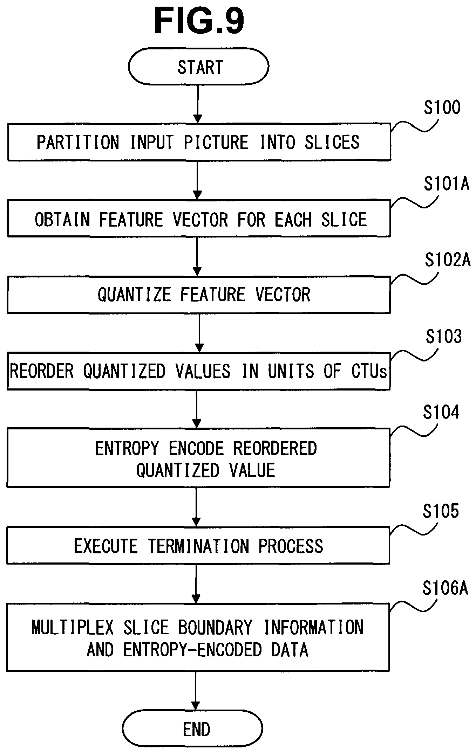

Next, an operation of the NN video encoder 102 will be described. Here, the operation of the NN video encoder 102 will be described using an example in which an input picture is equally partitioned into three slices in the vertical direction. Fig. 8 is an explanatory diagram illustrating an example of slice partitioning in the NN video encoder 102. Fig. 9 is a flowchart illustrating an operation example of the NN video encoder 102.

In Fig. 8, W_img indicates the width (horizontal size) of the input picture. H_img indicates the height (vertical size) of the input picture. W_tensor indicates a size in the row direction of the feature vector. H_tensor indicates the size of the feature vector in the column direction.

An example in which the input picture is equally partitioned into three slices in the vertical direction is an example, and the manner of partitioning is not limited thereto. For example, the input picture may be unevenly partitioned. The number of partitioning may be two or three or more.

In the NN video encoder 102, the encoder 1001A partitions the input picture into a plurality of slices (step S101). In the present example embodiment, the input picture is equally partitioned into three slices in the vertical direction (see Fig. 8).

The encoder 1001A extracts a feature amount for each slice and generates a feature vector (step S101A).

The quantizer 1002 quantizes the feature vector for each slice to generate a quantized value (step S102A).

The processing in steps S103 and S104 is the same as the processing in the first example embodiment.

In step S104, the entropy encoder 1004 performs entropy encoding on the reordered quantized value to generate entropy-encoded data, and then terminates the processing (step S105). As described above, the termination is executed under the control of the second control section 1007.

The multiplexer 1005 multiplexes the slice boundary information and the entropy-encoded data to output as an NN bitstream (step S106A).

### [Description of Decoding Side]

In the NN video decoder 202, configurations and functions of the inverse quantizer 2002, the inverse reordering section 2003, the entropy decoder 2004, and the de-multiplexer 2005 are the same as those in the first example embodiment.

The first control section 2006 performs control so that decoding processing (hereinafter, simply referred to as decoding) by the decoder 2001A does not cross a slice boundary in feature vector domain based on slice boundary information obtained via the second control section 2007.

The decoder 2001A obtains a reconstructed image of an NN decoded picture from the reconstructed feature vector. However, when the reconstructed image of the slice region to be processed is obtained based on the control of the first control section 2006, the reconstructed feature vector of the slice region not to be processed is not used. That is, the reconstructed image of the slice region to be processed is similar to the reconstructed image obtained by decoding the reconstructed feature vector of the slice region to be processed as one picture.

The second control section 2007 monitors the entropy decoder 2004 and, after entropy decoding is performed on the last quantized value of each slice region, causes the entropy decoder 2004 to terminate the processing.

The termination of entropy decoding means to align the entropy-encoded data. That is, the alignment data for the data alignment is read from the entropy-encoded data. Furthermore, in a case where the entropy encoding is based on adaptive arithmetic coding, for the termination of the entropy decoding, the more probable symbol and its probability, and the engine of the arithmetic coding are reset.

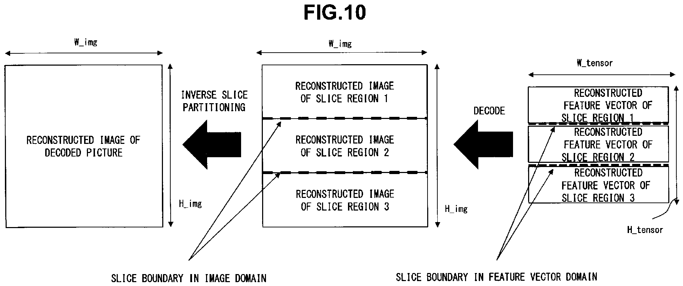

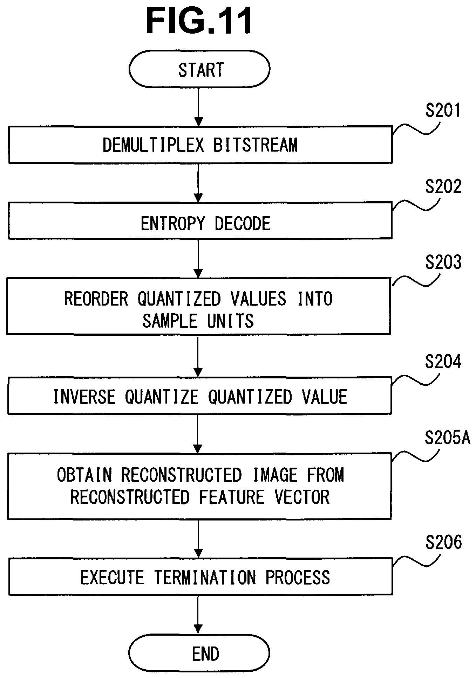

Next, the operation of the NN video decoder 202 will be described. Here, the operation of the NN video decoder 202 will be described using an example in which the input picture is equally partitioned into three slices in the vertical direction. Fig. 10 is an explanatory diagram illustrating an example of slice partitioning in the NN video decoder 202. Fig. 11 is a flowchart illustrating an operation example of the NN video decoder 202.

In Fig. 10, W_tensor indicates a size in the row direction of the feature vector. H_tensor indicates the size of the feature vector in the column direction. W_img indicates the width (horizontal size) of the decoded picture. H_img indicates the height (vertical size) of the decoded picture.

In the NN video decoder 202, the de-multiplexer 2005 demultiplexes the bitstream (step S201), but in the present example embodiment, the de-multiplexer 2005 obtains slice boundary information and entropy-encoded data by demultiplexing.

The processing in steps S202 to S204 is the same as the processing in the first example embodiment.

The decoder 2001A obtains a reconstructed image of the decoded picture from the reconstructed feature vector (step S205A). As described above, the decoder 2001A does not use the reconstructed feature vector of the slice region that is not the processing target when obtaining the reconstructed image of the slice region to be processed based on the control of the first control section 2006. In other words, the decoder 2001A performs decoding so as not to cross the slice boundary in feature vector domain based on the slice boundary information.

Then, the entropy decoder 2004 terminates the processing (step S206). As described above, the termination is executed under the control of the second control section 2007.

In the present example embodiment, the effects of the first example embodiment can be obtained, and furthermore, encoding on the encoding side and decoding on the decoding side do not cross slice boundaries by the control of the first control section 1006 and the first control section 2006, so that independent decoding is guaranteed in video coding based on a neural network.

The entropy encoding processing on the encoding side and the entropy decoding processing on the decoding side are not continuous at the slice boundary by the control related to the termination of the second control section 1007 and the second control section 2007, and thus, the data partitioning is guaranteed in the video coding based on the neural network.

### [Configuration of Encoder and Decoder]

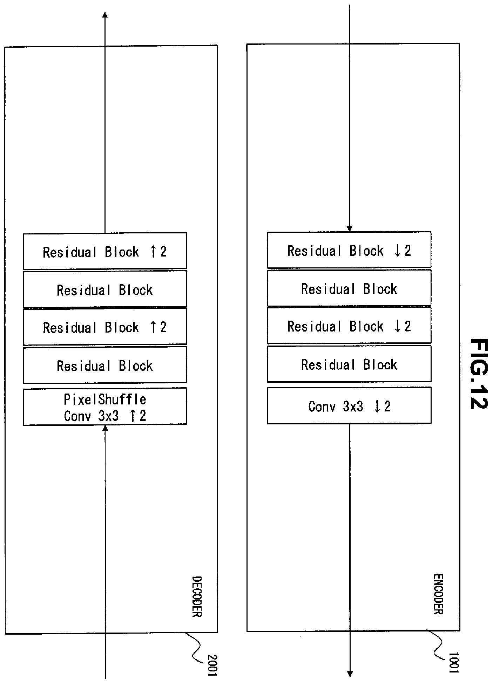

Fig. 12 is a block diagram illustrating a configuration example of the encoder 1001 and the decoder 2001 according to the first example embodiment. In Fig. 12, "downward arrow (↓) 2" represents 1/2 subsamples (also referred to as pooling). "Upward arrow (↑) 2" represents 2 upsamples. The encoder 1001A and the decoder 2001A in the second example embodiment can also be configured as illustrated in Fig. 12.

In the example illustrated in Fig. 12, the encoder 1001 includes four Residual Blocks and one Convolution Block. The Residual Block includes two Convolutional Blocks and one Shortcut Link. The Convolutional Block includes one Convolution layer and one activation function.

The decoder 2001 includes four Residual Blocks and one PixelShuffle convolution layer. The Pixel Shuffler is a mechanism proposed as a Sub-Pixel Convolution. The Pixel Shuffler reorders the input feature vectors and outputs high-resolution feature vectors.

As the activation function, Parametric Rectified Linear Unit (Parametric ReLU) can be used in which, in a case where an input value is less than 0, an output value is a value obtained by multiplying the input value by α (where, α is a parameter and is determined by learning), and in a case where an input value is 0 or more, an output value is the same value as the input value.

The configuration illustrated in Fig. 12 is an example, and the configurations of the encoders 1001 and 1001A and the decoders 2001 and 2001A are not limited to the configuration illustrated in Fig. 12.

### Third Example Embodiment.

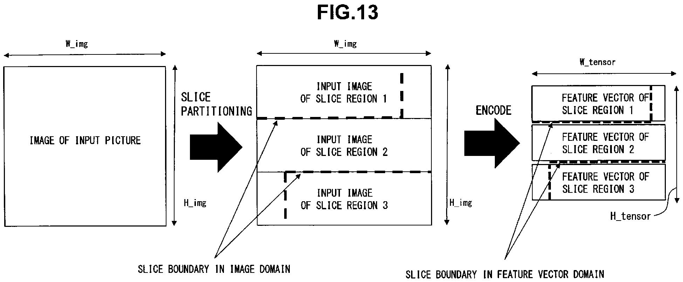

In the second example embodiment, in the NN video encoder 102, the encoder 1001A equally partitions the input picture into three slices in the vertical direction (see Fig. 8). However, the encoder 1001A may use a partitioning method (partitioning example in which the slice region 2 and the slice region 1 exist in the same row and the slice region 2 and the slice region 3 exist in the other same row) as illustrated in Fig. 13. In Fig. 13, a broken line indicates a slice boundary.

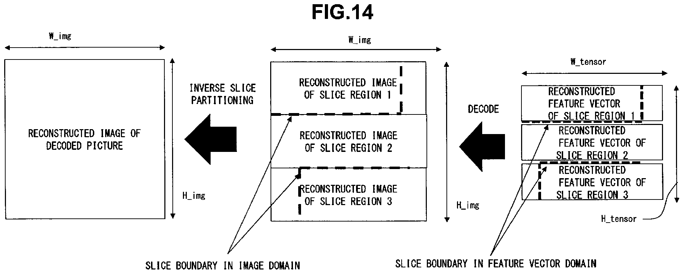

The NN video decoder 202 uses three slices obtained by equally partitioning the input picture in the vertical direction (see Fig. 10). However, a partitioning method (partitioning example in which the slice region 2 and the slice region 1 exist in the same row and the slice region 2 and the slice region 3 exist in the other same row) as illustrated in Fig. 14 may be used. In Fig. 14, a broken line indicates a slice boundary.

The configurations of the NN video encoder and the NN video decoder of the present example embodiment may be the same as the configuration in the second example embodiment illustrated in Fig. 7.

### Fourth Example Embodiment.

The NN video encoder and the NN video decoder of each of the above example embodiments can also support high-efficiency encoding utilizing a correlation between color components (also referred to as inter-channel). For example, in the reordering section 1003 and the inverse reordering section 2003 described above, the color components CTU belonging to the same position in the space may be grouped and processed instead of treating each color component independently.

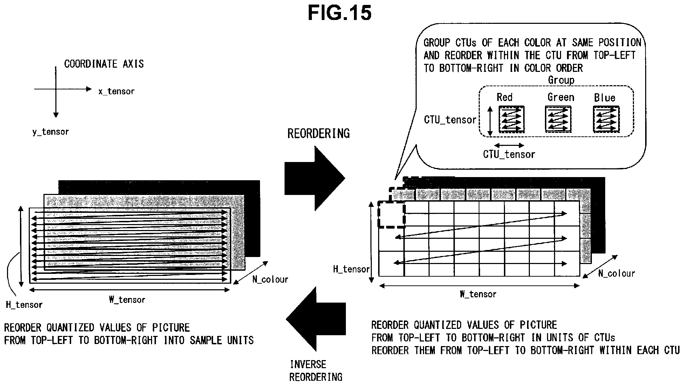

For example, in a case where the input video has an RGB 4:4:4 format, as illustrated on the right side of Fig. 15, the reordering section 1003 groups the CTUs of the colors belonging to the same position in the space and executes the reordering processing. Specifically, the reordering section 1003 groups the CTUs of each color at the same position, and reorders the quantized values from top-left to bottom-right in the CTU in color order.

Similarly, the inverse reordering section 2003 reorders the quantized values of the pictures from the top-left to the bottom-right in units of CTUs in units of groups, and reorders the quantized values from the top-left to the bottom-right in each CTU.

A unit finer than the CTU may be introduced, and the quantized values of the CTUs of the colors may be reordered in the group by the finer unit. As an example, when the fine unit is 1×1, the quantized value of the CTU of each color is reordered in the order of Red, Green, and Blue from the bottom-left to the bottom-right.

The NN video encoder and the NN video decoder of each of the above-described example embodiments can apply the above-described grouping to a color space other than RGB (YCoCr or the like) and a format other than 4:4:4 (4:2:0 or the like).

### Fifth Example Embodiment.

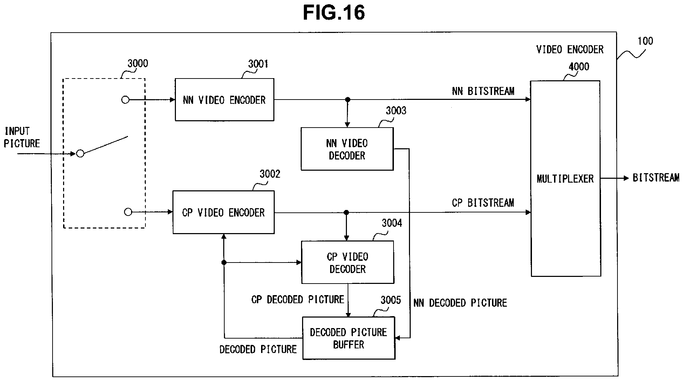

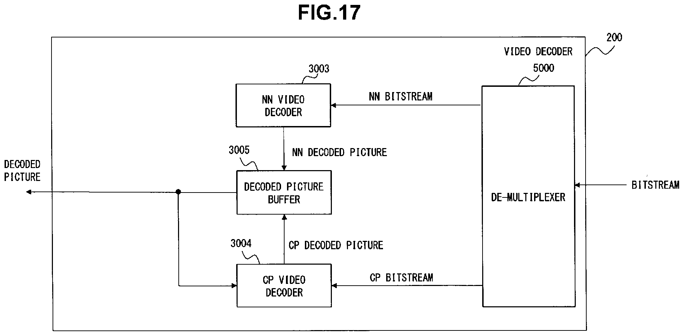

Fig. 16 is a block diagram illustrating a configuration example of a video encoder. Fig. 17 is a block diagram illustrating a configuration example of a video decoder.

The video encoder 100 illustrated in Fig. 16 includes a switch 3000, an NN video encoder 3001, an NN video decoder 3003, a CP video encoder 3002, a CP video decoder 3004, a decoded picture buffer 3005, and a multiplexer 4000 that performs multiplexing processing of entropy-encoded data and other information.

"NN" means a neural network. "CP" means prediction based on a coding unit.

The CP video encoder 3002 performs video encoding processing by a video coding scheme based on predictive coding in units of coding units. The CP video decoder 3004 performs decoding processing by a video coding scheme based on predictive coding in units of coding units. Decoded picture buffer 3005 is a storage section that stores decoded pictures (reconstructed pictures). As described above, a scheme conforming to H.264/AVC, H.265/HEVC, H.266/VVC, or the like can be used as the video coding scheme.

As the NN video encoder 3001, the NN video encoder 101 or the NN video encoder 102 in each of the above example embodiments can be used. As the NN video decoder 3003, the NN video decoder 201 or the NN video decoder 202 in each of the above example embodiments can be used.

A video decoder 200 illustrated in Fig. 17 includes a de-multiplexer 5000 that demultiplexes a bitstream, an NN video decoder 3003, a CP video decoder 3004, and a decoded picture buffer 3005.

That is, the video encoder 100 illustrated in Fig. 16 and the video decoder 200 illustrated in Fig. 17 are a video encoder and a video decoder in which the NN video encoder 101 or the NN video encoder 102 described above is the NN video encoder 3001, the NN video decoder 201 or the NN video decoder 202 described above is the NN video decoder 3003, and the video encoder and the video decoder are combined with the CP video encoder 3002 and the CP video decoder 3004 based on the video coding scheme based on the predictive coding in the coding unit.

### [Description of Encoding Side]

In the video encoder 100 illustrated in Fig. 16, the switch 3000 supplies the input picture to either the NN video encoder 3001 or the CP video encoder 3002.

The NN video encoder 3001 operates similarly to the NN video encoder 101 of the first example embodiment or the NN video encoder 102 of the second example embodiment to generate an NN bitstream.

The NN video decoder 3003 receives an input of the NN bitstream supplied from the NN video encoder 3001, and operates similarly to the NN video decoder 201 of the first example embodiment or the NN video decoder 202 of the second example embodiment to obtain a decoded picture (NN decoded picture). The NN video decoder 3003 stores the NN decoded picture in the decoded picture buffer 3005.

The CP video encoder 3002 performs video coding based on predictive coding in a coding unit by using an input picture and a decoded picture stored in the decoded picture buffer 3005, and generates a bitstream (also referred to as a CP bitstream).

The CP video decoder 3004 inputs the CP bitstream supplied from the CP video encoder 3002, performs entropy decoding processing, and then performs decoding processing based on predictive coding in a coding unit to obtain a decoded picture (also referred to as a CP decoded picture). The CP video decoder 3004 stores the CP decoded picture in the decoded picture buffer 3005.

The decoded picture stored in decoded picture buffer 3005 is used as a reference picture.

In the configuration illustrated in Fig. 16, the NN video decoder 3003 receives an NN bitstream from the NN video encoder 3001 and executes entropy decoding processing. Then, the NN video decoder 3003 obtains an NN decoded picture from the encoded data obtained by the entropy decoding. However, the NN video decoder 3003 may be configured to receive the intermediate data (for example, the quantized value) before entropy encoding from the NN video encoder 3001 and obtain an NN decoded picture from the intermediate data. In that case, the NN video decoder 3003 may not execute entropy decoding processing.

In the configuration illustrated in Fig. 16, the CP video decoder 3004 receives the CP bitstream from the CP video encoder 3002 and performs entropy decoding processing. Then, the CP video decoder 3004 obtains a CP decoded picture from the encoded data obtained by entropy decoding. However, the CP video decoder 3004 may be configured to receive the intermediate data before entropy encoding (for example, the quantized value) from the CP video encoder 3002 and obtain a CP decoded picture from the intermediate data. In that case, the CP video decoder 3004 may not perform entropy decoding processing.

### [Description of Decoding Side]

In the video decoder 200 illustrated in Fig. 17, the NN video decoder 3003 operates similarly to the NN video decoder 201 of the first example embodiment or the NN video decoder 202 of the second example embodiment based on the encoded data obtained by demultiplexing the NN bitstream to obtain an NN decoded picture. The NN video decoder 3003 stores the NN decoded picture in the decoded picture buffer 3005.

The CP video decoder 3004 demultiplexes the CP bitstream, performs entropy decoding processing, and obtains a CP decoded picture based on the obtained encoded data. The CP video decoder 3004 stores the CP decoded picture in the decoded picture buffer 3005.

The video decoder 200 outputs the NN decoded picture or the CP decoded picture stored in the decoded picture buffer 3005 as the decoded picture.

### [First Modification]

In the above example embodiments, the reordering section 1003 and the inverse reordering section 2003 use the CTU unit of the width CTU_tensor of the coding unit in the encoded feature vector as the implicit predetermined unit in the reordering and the inverse reordering. However, the predetermined unit may be explicitly embedded in the bitstream. That is, the predetermined unit may be multiplexed into a bitstream. The predetermined unit may be a value other than CTU_tensor as long as it is equal to or less than CTU_img.

In a case where the predetermined unit is multiplexed into the bitstream, in the video decoder or the NN video decoder related to the video encoder or the NN video encoder of the first modification, the de-multiplexers 2005 and 5000 demultiplex the predetermined unit of the inverse reordering from the bitstream.

### [Second Modification]

In the second example embodiment and the third to fifth example embodiments in the case of using the components of the second example embodiment, both the independent decoding and the data partitioning of the slice are satisfied. However, in a case where complete independent decoding of slices is not required, the first control section 1006 in the NN video encoder 102 may relax a slice boundary that cannot be crossed. For example, when a feature vector of a slice region to be processed is encoded, a form in which an input image of a slice region related to a slice subsequent in a bitstream is not allowed to cross is considered. That is, the feature vector of the slice region 1 (see Fig. 8) is generated using the input image of the slice region 1. The feature vector of the slice region 2 is generated using the input images of the slice region 1 and the slice region 2. The feature vector of the slice region 3 is generated using the input images of the slice regions 1, 2, and 3. In this form (second modification), complete independent decoding cannot be obtained, but a decrease in encoding efficiency due to a partitioning loss can be relaxed.

In a video decoder or an NN video decoder related to the video encoder or the NN video encoder according to the second modification, when decoding the reconstructed feature vector of the slice region to be processed, the first control section 2006 performs control so as not to cross the reconstructed feature vector of the slice region related to the slice subsequent in the bitstream. That is, when obtaining the reconstructed image of the slice region 1, the reconstructed feature vector of the slice region 1 (see Fig. 10) is used. When obtaining a reconstructed image of the slice region 2, reconstructed feature vectors of the slice region 1 and the slice region 2 are utilized. When obtaining a feature reconstructed image of a slice region 3, reconstructed feature vectors of the slice regions 1, 2, 3 are utilized.

The slice boundary information described above can be configured as follows.

In a case where the frame is sliced at an equal size, the number of slice partitioning and the coordinates or slice number of the top-left corner of each slice.

In a case where the frame is sliced at a non-uniform size, the coordinates of the top-left corner of each slice and the horizontal and vertical widths of each slice.

In the example illustrated in Fig. 8, the slice numbers are reference numbers assigned to three slices (slice regions) in order from the top. The slice numbers may be assigned in order from the bottom.

Furthermore, in a case where a video coding scheme using a neural network and a video coding scheme using prediction based on a coding unit are combined, the slice boundary information described above can be configured as follows.

In a case where the frame is sliced at an equal size, the number of slice partitioning and the coordinates of the top-left corner or the number of the head CTU of each slice.

In a case where a frame is sliced at a non-uniform size, coordinates of a top-left corner of each slice or a number of a head CTU, and a horizontal width and a vertical width of each slice.

Each of the above example embodiments can be configured by hardware, but can also be implemented by a computer program.

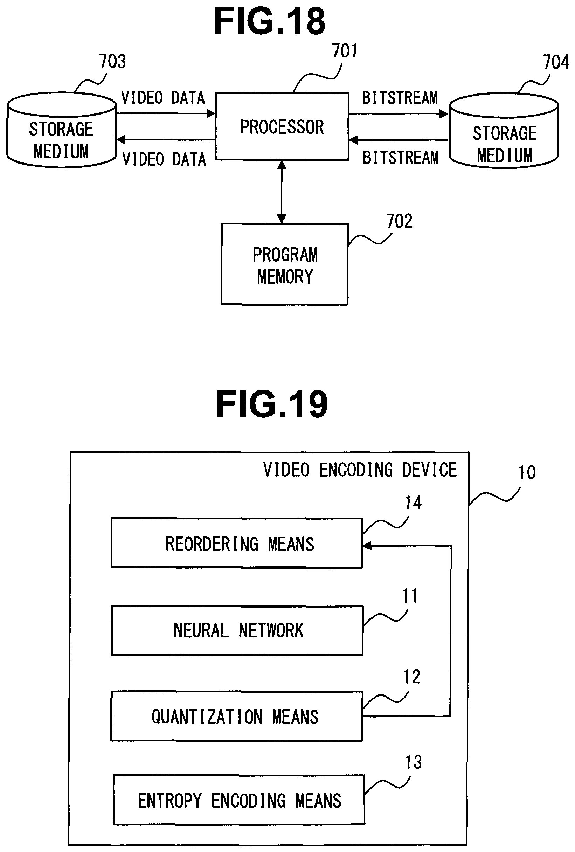

The information processing system illustrated in Fig. 18 includes a processor 701 such as one or more central processing units (CPUs), a program memory 702, a storage medium 703 for storing video data, and a storage medium 704 for storing a bitstream. The storage medium 703 and the storage medium 704 may be separate storage media, or may be storage regions composed of the same storage medium. As the storage medium, a magnetic storage medium such as a hard disk can be used.

In the information processing system, a program (a video encoding program or a video decoding program) for implementing the function of each block described in each of the above example embodiments is stored in the program memory 702.

Then, the processor 701 implements the functions of the video encoder 100, the NN video encoders 101 and 102, the video decoder 200, and the NN video decoders 201 and 202 described in each example embodiment by executing processing according to the program stored in the program memory 702.

For example, the functions of the NN video encoders 101 and 102 and the video encoder 100 are implemented by the processor 701 executing processing according to the video encoding program for implementing the functions of the blocks (excluding the decoded picture buffer 3005) in the NN video encoders 101 and 102 and the video encoder 100 illustrated in Figs. 3, 7, and 16.

For example, the functions of the NN video decoders 201 and 202 and the video decoder 200 are implemented by the processor 701 executing processing according to the video decoding program for implementing the functions of the blocks (excluding the decoded picture buffer 3005) in the NN video decoders 201 and 202 and the video decoder 200 illustrated in Figs. 3, 7, and 17.

At least the program memory 702 is a non-transitory computer readable medium. However, the program may be stored in various types of transitory computer readable media. The transitory computer-readable medium is supplied with the program via, for example, a wired communication path or a wireless communication path, that is, via an electrical signal, an optical signal, or an electromagnetic wave.

Fig. 19 is a block diagram illustrating main parts of the video encoding device. A video encoding device 10 (in the example embodiment, implemented by the video encoder 100 and the NN video encoders 101 and 102) illustrated in Fig. 19 includes a neural network 11 (in the example embodiment, implemented by the encoders 1001 and 1001A), a quantization means 12 (in the example embodiment, implemented by the quantizer 1002), and an entropy encoding means 13 (in example embodiments, implemented in entropy encoder 1004), and includes a reordering means 14 (in the example embodiment, implemented by the reordering section 1003) for reordering the quantized values output from the quantization means 12.

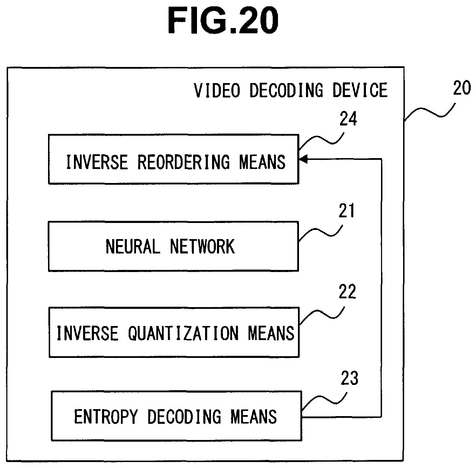

Fig. 20 is a block diagram illustrating main parts of the video decoding device. A video decoding device 20 (in the example embodiment, implemented by the video decoder 200 and the NN video decoders 201 and 202) illustrated in Fig. 20 includes a neural network 21 (in the example embodiment, implemented by the decoders 2001 and 2001A), an inverse quantization means 22 (in the example embodiment, implemented by the inverse quantizer 2002), and an entropy decoding means 23 (in the example embodiment, implemented by the entropy decoder 2004), and includes an inverse reordering means 24 (in the example embodiment, this is implemented by the inverse reordering section 2003) for reordering the quantized value output from the entropy decoding means 23.

Some or all of the above example embodiments may be described as the following Supplementary notes, but are not limited to the following.

(Supplementary note 1) A video encoding device comprising a neural network, quantization means, and entropy encoding means,
the video encoding device further comprises
reordering means for reordering quantized values output from the quantization means.

(Supplementary note 2) The video encoding device according to Supplementary note 1, further comprising
first control means (in the example embodiment, implemented by the first control section 1006) for preventing encoding processing based on the neural network from crossing a slice boundary.

(Supplementary note 3) The video encoding device according to Supplementary note 1 or 2, further comprising
predictive encoding means (in the example embodiment, implemented by the CP video encoder 3002) for performing predictive coding in units of coding units.

(Supplementary note 4) A video decoding device comprising a neural network, inverse quantization means, and entropy decoding means,
wherein the video decoding device further comprises
inverse reordering means for reordering quantized values output from the entropy decoding means.

(Supplementary note 5) The video decoding device according to Supplementary note 4, further comprising
first control means (in the example embodiment, implemented by the first control section 2006) for preventing decoding processing based on the neural network from crossing a slice boundary.

(Supplementary note 6) The video decoding device according to Supplementary note 4 or 5, further comprising
predictive decoding means (in the example embodiment, implemented by the CP video decoder 3004) for performing predictive decoding in units of coding units.

(Supplementary note 7) A video encoding method for performing encoding processing based on a neural network, quantization processing, and entropy encoding,
wherein the video encoding method comprises
reordering quantized values created by the quantization processing.

(Supplementary note 8) The video encoding method according to Supplementary note 7, further comprising
performing control such that the encoding processing does not cross a slice boundary.

(Supplementary note 9) The video encoding method according to Supplementary note 7 or Supplementary note 8, further comprising
performing predictive coding processing in units of coding units.

(Supplementary note 10) A video decoding method for executing decoding processing based on a neural network, inverse quantization processing, and entropy decoding processing,
wherein the video decoding method comprises
reordering quantized values obtained by the entropy decoding processing.

(Supplementary note 11) The video decoding method according to Supplementary note 10, further comprising
performing control such that the decoding processing does not cross a slice boundary.

(Supplementary note 12) The video decoding method according to Supplementary note 10 or Supplementary note 11, further comprising
performing predictive decoding processing in units of coding units.

(Supplementary note 13) A video encoding program for causing a computer to:
perform encoding processing based on a neural network, quantization processing, and entropy encoding; and
perform processing of reordering quantized values created by the quantization processing.

(Supplementary note 14) The video encoding program according to Supplementary note 13,
wherein the video encoding program further causes the computer to:
perform control such that the encoding processing does not cross a slice boundary.
perform control such that the encoding processing does not cross a slice boundary.

(Supplementary note 15) The video encoding program according to Supplementary note 13 or Supplementary note 14,
wherein the video encoding program further causes the computer to:
perform control such that the encoding processing does not cross a slice boundary.
perform predictive coding processing in units of coding units.

(Supplementary note 16) A video decoding program for causing a computer to:
execute decoding processing based on a neural network, inverse quantization processing, and entropy decoding processing; and
perform processing of reordering quantized values obtained by the entropy decoding processing.

(Supplementary note 17) The video decoding program according to Supplementary note 16,
wherein the video decoding program further causes the computer to:
perform control such that the decoding processing does not cross a slice boundary.

(Supplementary note 18) The video decoding program according to Supplementary note 16 or Supplementary note 17,
wherein the video decoding program further causes the computer to:
perform predictive decoding processing in units of coding units.

(Supplementary note 19) A storage medium storing a bitstream generated by a video encoding device comprising a neural network, quantization means, and entropy encoding means, the video encoding device comprising reordering means for reordering quantized values output from the quantization means.

(Supplementary note 20) A storage medium storing a bitstream generated by a video encoding method for performing encoding processing based on a neural network, quantization processing, and entropy encoding, the video encoding method reordering quantized values created by the quantization processing.

(Supplementary note 21) The video encoding device according to any one of Supplementary notes 1 to 3, wherein
a predetermined unit of reordering is multiplexed into a bitstream.

This Supplementary note is related to the first modification described above.

(Supplementary note 22) The video decoding device according to any one of Supplementary notes 4 to 6, wherein
a predetermined unit of inverse reordering is demultiplexed from a bitstream.

This Supplementary note is related to the first modification described above.

(Supplementary note 23) The video encoding device according to Supplementary note 2, wherein
the first control means does not allow encoding processing based on the neural network to cross only a slice boundary of a slice region subsequent in bitstream order.

This Supplementary note is related to the second modification described above.

(Supplementary note 24) The video decoding device according to Supplementary note 5, wherein
the first control means does not allow decoding processing based on the neural network to cross only a slice boundary of a slice region subsequent in bitstream order.

This Supplementary note is related to the second modification described above.

This application is based upon and claims the benefit of priority from Japanese patent application No. 2023-155649 filed on September 21, 2023 and Japanese patent application No. 2023-179925 filed on October 19, 2023, the disclosures of which are incorporated herein in their entirety by reference.

### Reference Signs List

- 10: Video encoding device
- 11: Neural network
- 12: Quantization means
- 13: Entropy encoding means
- 14: Reordering means
- 20: Video decoding device
- 21: Neural network
- 22: Inverse quantization means
- 23: Entropy decoding means
- 24: Inverse reordering means
- 100: Video encoder
- 101, 102: NN video encoder
- 200: Video decoder
- 201, 202: NN video decoder
- 701: Processor
- 702: Program memory
- 703, 704: Storage medium
- 1001, 1001A: Encoder
- 1002: Quantizer
- 1003: Reordering section
- 1004: Entropy encoder
- 1005: Multiplexer
- 1006: First control section
- 1007: Second control section
- 2001, 2001A: Decoder
- 2002: Inverse quantizer
- 2003: Inverse reordering section
- 2004: Entropy decoder
- 2005: De-multiplexer
- 2006: First control section
- 2007: Second control section
- 3000: Switch
- 3001: NN video encoder
- 3002: CP video encoder
- 3003: NN video decoder
- 3004: CP video decoder
- 3005: Decoded picture buffer
- 4000: Multiplexer
- 5000: De-multiplexer

## Claims

1. A video encoding device comprising a neural network, quantization means, and entropy encoding means,
the video encoding device further comprises
reordering means for reordering quantized values output from the quantization means.

2. The video encoding device according to claim 1, further comprising
first control means for preventing encoding processing based on the neural network from crossing a slice boundary.

3. The video encoding device according to claim 1 or 2, further comprising predictive encoding means for performing predictive coding in units of coding units.

4. A video decoding device comprising a neural network, inverse quantization means, and entropy decoding means,
wherein the video decoding device further comprises
inverse reordering means for reordering quantized values output from the entropy decoding means.

5. The video decoding device according to claim 4, further comprising
first control means for preventing decoding processing based on the neural network from crossing a slice boundary.

6. The video decoding device according to claim 4 or 5, further comprising
predictive decoding means for performing predictive decoding in units of coding units.

7. A video encoding method for performing encoding processing based on a neural network, quantization processing, and entropy encoding,
wherein the video encoding method comprises
reordering quantized values created by the quantization processing.

8. The video encoding method according to claim 7, further comprising
performing control such that the encoding processing does not cross a slice boundary.

9. The video encoding method according to claim 7 or 8, further comprising
performing predictive coding processing in units of coding units.

10. A video decoding method for executing decoding processing based on a neural network, inverse quantization processing, and entropy decoding processing,
wherein the video decoding method comprises
reordering quantized values obtained by the entropy decoding processing.

11. The video decoding method according to claim 10, further comprising
performing control such that the decoding processing does not cross a slice boundary.

12. The video decoding method according to claim 10 or 11, further comprising
performing predictive decoding processing in units of coding units.

13. A video encoding program for causing a computer to:
perform encoding processing based on a neural network, quantization processing, and entropy encoding; and
perform processing of reordering quantized values created by the quantization processing.

14. The video encoding program according to claim 13,
wherein the video encoding program further causes the computer to:
perform control such that the encoding processing does not cross a slice boundary.

15. The video encoding program according to claim 13 or 14,
wherein the video encoding program further causes the computer to:
perform predictive coding processing in units of coding units.

16. A video decoding program for causing a computer to:
execute decoding processing based on a neural network, inverse quantization processing, and entropy decoding processing; and
perform processing of reordering quantized values obtained by the entropy decoding processing.

17. The video decoding program according to claim 16,
wherein the video decoding program further causes the computer to:
perform control such that the decoding processing does not cross a slice boundary.

18. The video decoding program according to claim 16 or 17,
wherein the video decoding program further causes the computer to:
perform predictive decoding processing in units of coding units.

19. A storage medium storing a bitstream generated by a video encoding device comprising a neural network, quantization means, and entropy encoding means, the video encoding device comprising reordering means for reordering quantized values output from the quantization means.

20. A storage medium storing a bitstream generated by a video encoding method for performing encoding processing based on a neural network, quantization processing, and entropy encoding, the video encoding method reordering quantized values created by the quantization processing.
